Europäisches Patentamt

European Patent Office

Office européen des brevets

(11) Publication number: **0 156 623**
**B1**

(12) **EUROPEAN PATENT SPECIFICATION**

(45) Date of publication of patent specification: **19.09.90**

(21) Application number: **85301929.7**

(22) Date of filing: **20.03.85**

(51) Int. Cl.⁵: **C 02 F 9/00**

(54) Treatment of waste liquors.

(30) Priority: **23.03.84 GB 8407545**

(43) Date of publication of application:
**02.10.85 Bulletin 85/40**

(45) Publication of the grant of the patent:
**19.09.90 Bulletin 90/38**

(84) Designated Contracting States:
**AT BE CH DE FR GB IT LI NL SE**

(56) References cited:
**AU-B-4 003 278**
**GB-A-1 512 481**
**US-A-3 066 095**
**US-A-4 116 828**

(73) Proprietor: **ALLIED COLLOIDS LIMITED**
**P.O. Box 38 Low Moor**
**Bradford West Yorkshire, BD12 0JZ (GB)**

(72) Inventor: **Field, John Rodney**
**2 Leyburn Avenue**
**Hipperholme Halifax (GB)**
Inventor: **Norman, Peter Ian**
**35 Lumb Lane**
**Liversedge West Yorkshire (GB)**

(74) Representative: **Lawrence, Peter Robin**
**Broughton et al**
**GILL JENNINGS & EVERY 53-64 Chancery Lane**
**London WC2A 1HN (GB)**

Courier Press, Leamington Spa, England.

## Description

It is conventional to treat wool used in the manufacture of textiles, and especially carpets, to a number of wet processing stages, either when the wool is in the form of the final carpet or other textile or, more usually, when the wool is in the form of yarn prior to manufacture of the final textile. One typical stage is a scouring stage. Another typical stage is a dyeing stage. Each treatment stage generates an effluent and often all the effluents are combined into a single effluent which is eventually discharged. It is of course necessary that the discharged effluent should not contain toxic or other offensive chemicals and conventional effluent treatment systems are usually satisfactory. However a particular problem arises when pyrethroid insecticide is used as a moth proofing agent or general purpose insecticide in the wool since the resultant effluent liquor is then likely to be contaminated with this insecticide.

This creates serious problems since these insecticides, despite their generally low mammalian toxicity, tend to have high toxicity to fish and lower aquatic life forms. For instance, the lethal threshold concentration (LCo) for Atlantic salmon has been found by Zitko et al to be only 8.8 µg/l. Consequently, effluents containing trace amounts may be lethal to fish if passed directly into a river and may have a deleterious effect on biological treatment processes if the effluent is passed first to a sewage works.

Conventional treatments for the purification of wool effluent liquor before discharge have little or no effect on the concentration of pyrethroid insecticide in the liquor and so it is necessary to reduce to an absolute minimum the volume of liquor containing pyrethroid insecticide that is discharged. This creates serious restrictions on its use and it would be very desirable to devise a simple and cost effective way of significantly reducing the content of pyrethroid insecticide in wool treatment effluent liquors.

It is known to remove certain impurities from liquors, for instance natural colour from wool water, by absorption of the impurity onto an absorbent clay. However the liquor generally is otherwise fairly pure or, at the most, contains only a relatively small number of well defined impurities, with the result that the absorbent clay can be expected to absorb the specified impurity.

We have established that it is, in theory, possible to reduce the amount of permethrin in a wool treatment effluent liquor by flocculation using aluminium sulphate and slaked lime. Unfortunately the process is not commercially very satisfactory. An effluent that it might be desirable to treat by this method is the effluent from a wool dyeing stage but such effluent will normally contain relatively high concentrations (l to 3 g/l) acetic or formic acid. The aluminium sulphate will then only be effective if large amounts of alkali are added and if the pH is monitored carefully during addition. These problems can be reduced if the effluent that is treated is dilute effluent containing liquor from a large number of different wool treatment stages but this requires the handling of large volumes of effluent and again may necessitate careful control of pH.

At present there is no satisfactory way of reducing the permethrin or other pyrethroid concentration of wool treatment effluents from wool processes wherein this insecticide has been applied to the wool.

In the invention a wool treatment effluent liquor containing pyrethroid insecticide is purified by dispersing 0—2 to 2 g/l of bentonite in the liquor and absorbing the pyrethroid onto the bentonite and then adding 0.1 to 5 mg/l of an anionic, non-ionic or cationic polyelectrolyte having a molecular weight above 500,000 as a polymeric flocculant and flocculating the particulate material and separating the particulate material from the liquor.

Since the wool treatment liquor contains a wide variety of complex organic chemicals, many of them macromolecular, it is very surprising that satisfactory absorption of the pyrethroid onto the clay does occur even when the clay is present in small amounts of below 2 g/l. Having absorbed the pyrethroid effectively onto the particulate material it is then possible to flocculate this material effectively so as to remove the pyrethroid from the liquor, and as a result of using an organic, high molecular weight, polymeric flocculant it is possible to achieve satisfactory flocculation irrespective of the pH or other characteristics of the liquor, by appropriate choice of the polymeric flocculant.

Accordingly the invention provides, for the first time, a solution to the hitherto unsolved problem of how to treat satisfactorily, prior to discharge, wool treatment effluent liquors containing pyrethroid insecticide.

The pyrethroid insecticide may be any of the insecticides that are recognised as being naturally occurring or synthetic pyrethroids and which can be broadly defined as insecticidally active cycloalkyl carboxylate esters, the esterifying groups often being aromatic or heterocyclic alcohols, often substituted benzyl alcohols, especially phenoxy substituted benzyl alcohols. In natural and many synthetic pyrethroids the cycloalkyl group is cyclopropyl but cyclobutyl pyrethroids are also known. For instance suitable cycloalkyl groups and suitable esterifying groups are identified in EP 0104908 and in the literature referred to therein. The pyrethroids used in the invention are those that have effective insecticidal, and especially moth proofing, activity on wool and which are toxic to fish and lower aquatic life. The preferred pyrethroid is permethrin, namely 3-phenoxybenzyl (IR,IS) cis, trans-2,2-dimethyl-3-(2,2-dichlorovinyl) cyclopropane-1-carboxylate.

The pyrethroid is normally supplied in the form of an emulsified concentrate that is mixed into the liquor used for a wool treatment, for instance dyeing or scouring, or may be applied in a separate treatment stage, the liquor containing pyrethroid as the only active ingredient.

The effluent liquor that is treated in the invention may be the liquor coming direct from the stage at which the pyrethroid was applied or it may be a combined liquor wherein liquor from this and other stages is combined into a single effluent liquor. The liquor preferably is or comprises the effluent from a wool scour stage, in which event the liquor may contain conventional scouring surfactants and other chemicals, for instance soaps and soda ash. Alternatively the effluent may be or comprise effluent from a wool dyeing stage, in which event the effluent will normally contain acid, such as acetic or formic acid, and will have a low pH, often 1 to 4. Even when wool and dye liquors are combined prior to the treatment of the invention, the resultant liquor is often still acidic and the invention is of particular value in the treatment of acidic liquors, for instance having pH below 5.

The liquor may be treated while hot or after cooling to ambient temperature.

The liquor will generally contain at least 5 and often at least 20 mg/l (ppm) pyrethroid, for instance up to 100 mg/l pyrethroid. The treatment of the invention can easily be conducted to reduce the concentration to below 1 mg/l and preferably to below 0.5 mg/l.

Bentonite is an absorbent particulate clay and a suitable material is sold under the trade name "Organosorb". The amount of from 0.2 to 2g/l should be sufficient to absorb substantially all the pyrethroid in the liquor. The bentonite clay material is mixed with the liquor and time should be allowed for the pyrethroid to be absorbed onto the clay before the flocculant is added. The time should normally be at least 1 minute, generally 5 to 30 minutes.

The flocculant may be any anionic, cationic or non-ionic polyelectrolyte that will serve to flocculate the particulate material in the liquor and will have high molecular weight of above 500,000, typically 1 million to 30 million. The particular polymeric material will be selected having regard to, for instance, the pH of the effluent and the other components in it. The flocculant can be based on a natural polymer, for instance cationic starch, but preferably is a synthetic polymer formed from one or more monomers that may be non-ionic, anionic or cationic. The monomers preferably include acrylic monomers. A preferred non-ionic monomer is acrylamide and this may be homopolymerised or copolymerised with anionic or cationic monomer. Suitable anionic monomers are acrylic acid and other ethylenically unsaturated acids. Suitable cationic monomers are dialkylaminoalkyl acrylamides and, especially, dialkylaminoalkyl esters of acrylic or methacrylic acid, wherein the alkyl and alkylene groups generally contain 1 to 4 carbon atoms each and the cationic monomer is present as an acid addition salt or, preferably, a quaternary salt. Other suitable monomers, that may be used alone or copolymerised with acrylic monomers, include diallyl dimethyl ammonium chloride. Other suitable polymers include those formed by reaction of methylamine with epichlorhydrin.

The amount of flocculant that is added is between 0.1 and 5 mg/l.

The flocculation is conducted in conventional manner and results in the formation of flocs of the particulate material and these are separated from the liquor, gerally by settling. For instance they usually sink readily to the bottom of the liquor and the clear supernatant can then be run off for discharge to river or sewer.

The invention is illustrated in the following example.

Wool yarn, used in the manufacture of carpet, is subjected to a combined tape-scouring treatment and an insecticidal treatment by incorporation of an appropriate amount of Permethrin into a conventional scouring liquor, whereafter the yarn is scoured by this liquor in conventional manner.

To demonstrate the process of the invention a 300 cm$^3$ aliquot of the resultant spent tape-scouring liquor at 50°C and with a pH of 3.0 was treated by addition of 1.68 g/l bentonite and left for a further 2 minutes. A non-ionic high molecular polyacrylamide flocculant was then added at a rate of 1 mg/l. Stirring of the sample was continuous during these additions, the treatment taking some 5 minutes to perform. Flocs which formed during the treatment settled readily when stirring was stopped.

The liquor before treatment was turbid and grey in appearance and contained 50 mg/l Permethrin. After treatment it was clear and colourless, containing only 0.3 mg/l Permethrin. The pH of the liquor after treatment was unchanged, viz. 3.0. The liquor could then be discharged direct into a river or could be subjected to conventional water treatment processes or could be recycled for further use.

## Claims

1. A process in which pyrethroid insecticide is removed from a wool treatment effluent liquor containing pyrethroid insecticide, characterised in that the process comprises dispersing 0.2 to 2 g/l of bentonite in the liquor and absorbing the pyrethroid onto the bentonite and then adding 0.1 to 5 mg/l of an anionic, non-ionic or cationic polyelectrolyte having a molecular weight above 500,000 as polymeric flocculant and flocculating the particulate material and separating the particulate material from the liquor.

2. A process according to claim 1 in which the effluent liquor is or comprises effluent from a wool scouring stage.

3. A process according to claim 1 in which the effluent liquor is or comprises effluent from a wool dyeing stage.

4. A process according to any preceding claim in which the effluent liquor has pH below 5.

5. A process according to any preceding claim in which the pyrethroid is Permethrin.

6. A process according to any preceding claim in which the effluent liquor contains 5 to 100 mg/l pyrethroid before the treatment and below 1 mg/l pyrethroid after the treatment.

7. A process according to any preceding claim in which the particulate material is dispersed in the liquor for 5 to 30 minutes before adding the flocculant.

## Patentansprüche

1. Ein Verfahren, in welchem ein Pyrethroid-Insektizid aus einer ein Pyrethroid-Insektizid enthaltenden Wollbehandlungs-Flotte abgetrennt wird, dadurch gekennzeichnet, daß das Verfahren ein Dispergieren von 0,2 bis 2 g/l Bentonit in der Flotte und ein Absorbieren des Pyrethroids an den Bentonit une hierauf ein Zusetzen von 0,1 bis 5 mg/l eines anionischen, nicht-ionischen oder kationischen Polyelektrolyten mit einem Molekulargewicht von über 500.000 als polymeres Flockungsmittel und ein Ausflocken des teilchenförmigen Materials und ein Abtrennen des teilchenförmigen Materials von der Flotte umfaßt.

2. Verfahren nach Anspruch 1, worin die Flotte eine aus einer Wollentfettungsstufe abströmende Flotte ist oder umfaßt.

3. Verfahren nach Anspruch 1, worin die Flotte eine aus einer Wollfärbestufe abströmende Flotte ist oder umfaßt.

4. Verfahren nach einen der vorstehenden Ansprüche, worin die abströmende Flotte einen pH-Wert unter 5 aufweist.

5. Verfahren nach einem der vorstehenden Ansprüche, worin das Pyrethroid Permethrin ist.

6. Verfahren nach einem der vorstehenden Ansprüche, worin die abströmen de Flotte 5 bis 100 mg/l Pyrethroid vor der Behandlung und unter 1 mg/l Pyrethroid nach dern Behandlung enthält.

7. Verfahren nach einem der vorstehenden Ansprüche, worin das teilchenförmige Material während 5 bis 30 Minuten in der Flotte dispergiert wird, bevor das Flockungsmittel zugesetzt wird.

## Revendications

1. Un procédé dans lequel un insecticide pyréthroïde est séparé d'une liqueur résiduaire de traitement de la laine contenant un insecticide pyréthroïde, caractérisé en ce que le procédé consiste à disperser 0,2 à 2 g/l de bentonite dans la liqueur et à absorber le pyréthroïde sur la bentonite et ensuite à ajouter 0,1 à 5 mg/l d'un polyélectrolyte anionique, non ionique ou cationique ayant un poids moléculaire de plus de 500,000 comme floculant polymère et à floculer la matière particulaire et à séparer la matière particulaire de la liqueur.

2. Un procédé selon la revendication 1, dans lequel la liqueur résiduaire est ou comprend l'effluent d'une étape de lavage de la laine.

3. Un procédé selon la revendication 1, dans lequel la liqueur résiduaire est ou comprend l'effluent d'une étape de teinture de la laine.

4. Un procédé selon l'une quelconque des revendications précédentes, dans lequel la liqueur résiduaire a un pH de moins de 5.

5. Un procédé selon l'une quelconque des revendications précédentes, dans lequel le pyréthroïde est le Perméthrin.

6. Un procédé selon l'une quelconque des revendications précédentes, dans lequel la liqueur résiduaire contient 5 à 100 mg/l de pyréthroïde avant le traitement et moins de 1 mg/l de pyréthroïde après le traitement.

7. Un procédé selon l'une quelconque des revendications précédentes, dans lequel la matière particulaire est dispersée dans la liqueur pendant 5 à 30 min avant d'ajouter le floculant.